# EUROPEAN PATENT SPECIFICATION

(11) **EP 1 897 233 B1**
(45) Date of publication and mention of the grant of the patent: **13.07.2011**
(21) Application number: 05856393.3
(22) Date of filing: 28.09.2005
(51) Int. Cl.: H04B 1/38, H04M 1/02

(54) **PORTABLE TERMINAL**
TRAGBARES ENDGERÄT
TERMINAL PORTATIF

(30) Priority: 27.06.2005 KR 20050055490
(43) Date of publication of application: 12.03.2008
(73) Proprietor: KT TECH, INC., Gyeonggi-do 463-769 (KR)
(72) Inventor: LEE, Ul-Ho, 9th Fl., Sinyoung tower, Gyeonggi-do 463-769 (KR); KIM, Yong-Jae, 9th Fl., Sinyoung tower, Gyeonggi-do 463-769 (KR)
(74) Representative: Strehl Schübel-Hopf & Partner
(86) International application number: PCT/KR2005/003220
(87) International publication number: WO 2007/001106

(56) References cited:
- WO-A1-01/84729
- KR-A- 20050 007 843
- KR-A- 20050 007 845

## Description

### Technical Field

The invention relates to a portable terminal; in particular, a portable terminal having keys on the main body that may be used by pressing the folder when the folder is fitted to the main body with the interior display screen is exposed to the exterior.

### Background Art

With such functions as camera and camcorder implemented on portable phones, PDA's, and portable computers, the swivel hinge is being extensively used, which allows display on a wide screen by rotating the display part and fitting it to the main body. In particular, with the wide-spread use of DMH(Digital Multimedia Broadcasting), the need to fit the display part to the main body for long hours is increasing. Also, the addition of multimedia functions has caused a demand for keys that can perform various complicated functions, which creates a burden on the design stage of implementing extra keys.

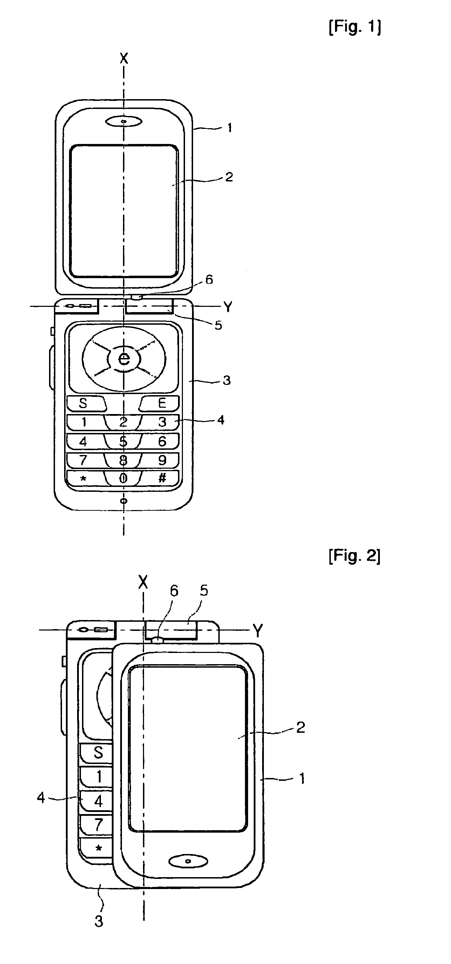

Fig. 1 is a perspective view of a portable terminal having a conventional swivel hinge, and Fig. 2 is a perspective view illustrating Fig. 1 when the folder is attached to the main body.

For the portable terminal having a swivel hinge shown in Figs. 1-2, the folder 1 is asymmetrically rotated by a swivel hinge 6 formed eccentrically to the central axis X and is attached to the main body 3. Thus, as shown in Fig. 2, a portion of the keys 4 on the main body 3 is exposed to the exterior. Extra functions are assigned to the exposed keys 4 when the folder 1 is fitted to the main body 3. For example, when the folder 1 has not rotated, they may be used as dial or alphanumeric keys, whereas when the folder 1 rotates to expose the display part 2 to the exterior as shown in Fig. 2, the exposed keys 4 act as keys that perform multimedia functions such as camera, camcorder, MP3 player, or DMB, etc.

WO 01/84729 A1 discloses a handheld electronic device such as a cellular radiotelephone including two housing portions. A first housing portion comprises at least two user interfaces and a second housing portion contains at least one user interface. The device incorporates a swivel hinge coupling the two housing portions together allowing the housing portions to rotate about a first axis such that the two housings can fold together or apart and at the same time rotate about a second axis allowing the housing portions to rotate relative to one another.

### Disclosure of Invention

### Technical Problem

However, with such a portable terminal having an eccentric swivel hinge, as shown in Fig. 1, the shape of the terminal is asymmetrically formed when it used with the display part 2 exposed to the exterior, making it unsightly in appearance. Also, since the asymmetrical portion leads to a corresponding increase in size, there is the problem that the use and carriage of the terminal is made inconvenient when the use of the keys 4 is not needed.

### Technical Solution

The invention has been developed to solve the foregoing problems, and it is therefore an objective of the invention to provide a portable terminal having keys on the main body that may be used by pressing the folder when the folder is fitted to the main body with the interior display screen exposed to the exterior.

The above objectives of the invention are realized in the following embodiment.

A portable terminal according to an embodiment of the invention comprises: a folder having a display part on the inner surface thereof, and a main body having keys which is connected by a swivel hinge to the folder, while the keys have extra functions when the folder is rotated, and the folder comprises at least one push protrusions that are formed to correspond to at least one of the keys when the main body and the folder are superposed with the inner surface of the folder exposed to the exterior.

Because such a portable terminal according to such an embodiment allows the use of the keys that are in contact with the push protrusion when the folder is fitted to the main body with the display part exposed to the exterior by applying pressure on the folder, it provides convenient use, a reduced size, and a sightly appearance.

It is preferable that the push protrusions apply pressure on the keys more efficiently by forming the push protrusions to be symmetrical across the central axis. Three push protrusions may be positioned on the lower part of the folder. It is preferable that the keys be given a greater variety of functions by assigning different functions according to the rotational direction of the folder.

At least two or more push protrusions are positioned on a surface of the folder, and the keys corresponding to the push protrusions may each have a function for the case of being pressed individually and a different function for the case of at least two or more keys being pressed simultaneously.

The folder comprises a control protrusion on the outer surface thereof, and when the main body and the folder are superposed with the inner surface of the folder exposed to the exterior, it joins with the main body to be rotatable about the control protrusion. It is preferable that the control protrusion be positioned on the rotational center axis of the folder.

The main body and the folder are joined by an open/shut hinge, and the open/shut hinge comprises open/shut hinge arms, which are formed on the upper end of the main body, and an open/shut hinge axis, which joins with the open/shut hinge arms and has a swivel hinge projecting on one side, while the open/shut hinge arms comprise rotation grooves, which guide the open/shut hinge axis in order that the folder may rotate about the control protrusion. The rotation grooves comprise elastic members which return the open/shut hinge axis to its original position.

### Brief Description of the Drawings

Fig. 1 is a perspective view of a conventional portable terminal having an eccentric swivel hinge.

Fig. 2 is a perspective view illustrating the portable terminal of Fig. 1 when the folder is rotated and fitted to the main body.

Fig. 3 is a perspective view of a portable terminal according to an embodiment of the invention.

Fig. 4 is a perspective view illustrating the portable terminal of Fig. 3 with the folder rotated 180° and fitted to the main body.

Fig. 5 is a side elevation view of the portable terminal of Fig. 4 as seen from direction A.

Fig. 6 is a perspective view of a portable terminal according to another embodiment of the invention.

Fig. 7 is a schematic drawing illustrating the state in which the open/shut hinge axis is inserted into the rotation grooves.

Fig.8 is a side elevation view of the portable terminal of Fig. 6 with the folder rotated 180° and fitted to the main body, as seen from direction B.

Fig.9 is a side elevation view of the portable terminal of Fig. 6 with the folder rotated 180° and fitted to the main body, as seen from direction C.

### Mode for the Invention

Hereinafter, embodiments of the invention will be described in more detail, where in the description with reference to the accompanying drawings, those components are rendered the same reference number that are the same or are in correspondence regardless of the figure number, and redundant explanations are omitted.

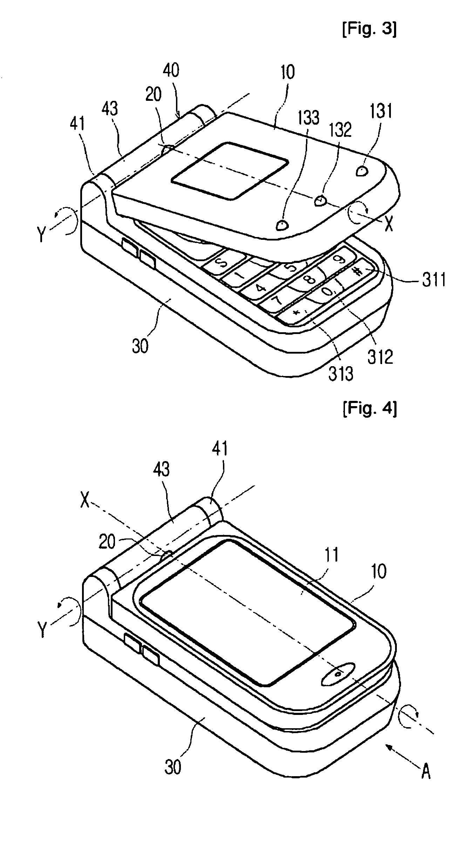

Fig. 3 is a perspective view of a portable terminal according to an embodiment of the invention.

As shown in Fig. 3, a portable terminal according to an embodiment of the invention comprises a folder 10, a main body 30, and a swivel hinge 20 and an open/ shut hinge 40 which join the folder 10 with the main body 30.

The folder 10 comprises a display part (not shown) on the inner surface thereof and several push protrusions 13. The folder 10 is joined with the main body 30 by the swivel hinge 20 and the open/shut hinge 40. Therefore, as shown in Fig. 3, not only is the folder 10 able to rotate about the Y axis by the open/shut hinge 40, but it is also able to rotate 180° about the X axis by the swivel hinge 20. The folder 10 comprises push protrusions 131, 132, 133 on the outer surface thereof, and by applying pressure on the inner surface of the folder 10 in correspondence with the push protrusions 131, 132, 133, the push protrusions 131, 132, 133 press the keys 31 positioned on the main body 30. Therefore, the inner surface of the folder 10 acts as buttons.

The push protrusions 131, 132, 133 are positioned on the outer surface of the folder 10, and Fig. 3 illustrates the push protrusions 131, 132, 133 as formed on the lower part of the folder 10. Of course, the position and number of the push protrusions 13 may vary as needed. In particular, it is preferable that the push protrusions 131, 132, 133 be formed to be symmetrical about the central line X, so that the push protrusions 131, 132, 133 may efficiently apply pressure on the keys 31.

Because the push protrusions 131, 132, 133 apply pressure on the keys 31 positioned on the main body 30, in order for them not to damage the keys 31 and for them to have a certain level of elasticity which allows the push protrusions to readily return to their original form, it is preferable that they be manufactured from rubber, etc. When the folder 10 is attached to the main body 30 with the display part exposed to the exterior (refer to Fig. 4), the push protrusions 131, 132, 133 come into contact with the keys 31 of the main body 30.

The main body 30 comprises several keys 31 on the front surface, and some of the keys 31 formed on the lower end come into contact with the push protrusions 131, 132, 133, when the folder 10 is fitted to the main body 30 with the display part exposed to the exterior. Open/shut hinge arms 41 are positioned on the upper part of the main body.

The keys 31 are positioned on the front surface of the main body 30, and may have different functions from their original functions when the folder 10 is rotated 180°. For example, the keys 311, 312, 313 on the lower part of the main body 30 may function as "*", "0", "#" when the folder 10 is in the state shown in Fig. 3, and may have such functions as "rewind", "play", or "stop" for video content when the folder 10 is rotated 180°, while since it is difficult to apply pressure on the middle key 312 separately, a function may be rendered for the case where pressure is applied on the three keys 311, 312, 313 simultaneously.

In addition, the keys 311, 312, 313 may have different functions according to the rotational direction of the folder 10. For example, a design may render the functions "play", "stop", "rewind", etc. for video content, as mentioned above when the folder 10 is rotated clockwise about the X axis, while rendering the functions "connect", "save", "disconnect", etc. for wireless internet access, when it is rotated counter-clockwise. Also, an extra function may be rendered for the case where pressure is applied on the keys 311, 312, 313 simultaneously.

Further, for the definite functioning of the left and right protrusions 131, 133, the push protrusion 132 positioned on the X axis may not be rendered a key's function but instead may be utilized as a control protrusion to improve the differentiation of left and right rotation.

The swivel hinge 20 is projected from one side of the open/shut hinge arm 41 and is connected to the folder 10, and supports the folder 10 so that the folder 10 may rotate 180° about the X axis. The swivel hinge 20 corresponds to the central axis of rotation of the folder 10, and is thus positioned on the X line, the center line of the folder 10.

The open/shut hinge 40 allows the folder 10 to rotate about the Y axis, and comprises the open/shut hinge axis 43 and the open/shut hinge arms 41, which rotatably support the open/shut hinge axis 43.

The open/shut hinge axis 43 is the central axis whereby the folder 10 rotates about the Y axis, and both ends are supported by the open/shut hinge arms 41. On one side of the open/shut hinge axis 43 is projected the swivel hinge 20. The open/shut hinge arms 41 are positioned on the upper end of the main body 30, and rotatably support the open/shut hinge axis 43.

In the present embodiment, the open/shut hinge comprises open/shut hinge arms 41 and an open/shut hinge axis 43, but the invention is not thereby limited, and the invention allows for any structure of which the folder 10 can rotate about the Y axis

Fig. 4 is a perspective view illustrating the portable terminal according to an embodiment of the invention with the folder 10 rotated 180° and fitted to the main body 30 with the display part 11 exposed to the exterior.

As shown in Fig. 4, the inner surface of the folder 10 comprises a display part 11, and the folder 10 may be fitted to the main body 30 with the display part 11 facing the exterior. With the display part 11 fitted to the main body as shown in Fig. 4, various functions such as games, the Internet, and DMB may be accessed conveniently through a large display part 11. Also, as the folder 10 is stacked exactly with the main body 30, the size may be reduced, and the convenience in use and carriage is improved.

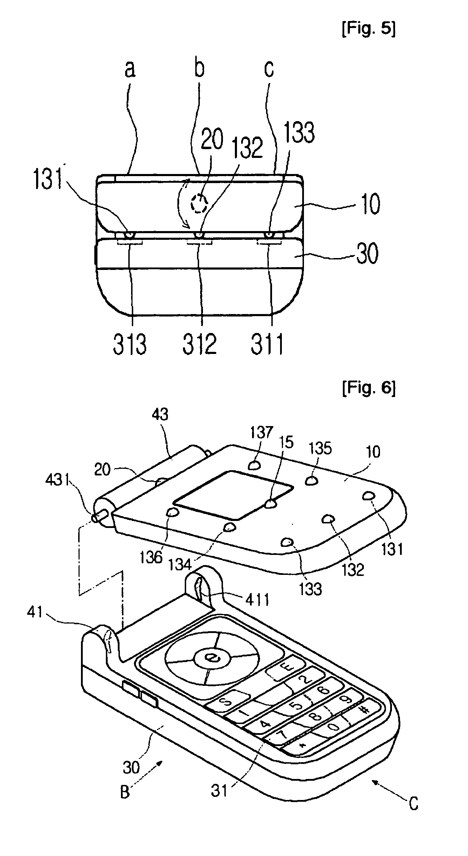

Fig. 5 is a side elevation view of the portable terminal of Fig. 4 as seen from direction A.

When the folder 10 is rotated 180° about the swivel hinge 20 and the folder 10 is fitted to the main body 30, the push protrusions 131, 132, 133 come into contact with the keys 311, 312, 313. Here, when the lower right side a of the folder 10 is pressed, pressure is applied by the push protrusion 133 to the key 311. Consequently, if the key 311 were given a play function for video content, the video content may be played on the display part 11. Similarly, when the lower left side c of the folder 10 is pressed, pressure is applied by the push protrusion 131 to the key 313. Also, when the center b of the folder 10 is pressed, the three push protrusions 131, 132, 133 apply pressure on the three keys 311, 312, 313 simultaneously, and a corresponding function is performed.

Fig. 6 is a perspective view of a portable terminal according to another embodiment of the invention.

The portable terminal according to another embodiment of the invention as illustrated in Fig. 6 comprises a folder 10 having push protrusions 13 on the outer surface thereof, a main body 30 having a several number of keys 31, and a swivel hinge 20 and open/shut hinge 40 which connect the folder 10 and the main body 30. The composition and operation of the embodiment illustrated in Fig. 6 is the same as that in Fig. 3 except for the push protrusions 13, the control protrusion 15, and the open/shut hinge 40, therefore the push protrusions 13, the control protrusion 15, and the open/shut hinge 40 will be discussed in more detail hereafter.

The control protrusion 15 is positioned on the outer surface of the folder 10, and more preferably on the central line X of the folder 10. The control protrusion 15 becomes the center of rotation for the folder 10 when the folder 10 is rotated 180° and fitted to the main body 30 with the display part 11 exposed to the exterior. The control protrusion 15, as illustrated in Fig. 6, is formed on the center of the folder. Also, it is preferable that the height of the control protrusion 15 be equal to or slightly greater than the push protrusions 13.

The push protrusions 13 are formed in certain intervals on the outer surface of the folder 10. The respective push protrusions 13 positioned on the lower part 131, 132, 133, middle part 134, 135, and upper part 136, 137 of the folder 10 come into contact with the keys 31 formed on the main body 30 when the folder 10 is rotated 180° about the swivel hinge 20. The keys 31 may have various functions corresponding to the push protrusions 131, 132, 133, 134, 135, 136, 137 when the folder 10 is rotated.

The open/shut hinge 40, as illustrated in Fig. 6, comprises open/shut hinge arms 41 positioned on the upper part of the main body 30, and an open/shut hinge axis 43 rotatably joined to the open/shut hinge arms 41.

The open/shut hinge axis 43 comprises insertion parts 431 on both ends projected along the direction of the axis. The insertion parts 431 are inserted into the rotation grooves 411 formed on the open/shut hinge arms 41, allowing the folder 10 to rotate about the control protrusion 15 perpendicularly to the axis of rotation X by a predetermined angle even when the folder 10 is fitted to the main body 30. The open/shut hinge arms 41 are positioned as a pair on the left and right of the upper part of the main body 30, with rotation grooves 411 positioned on the inner surfaces.

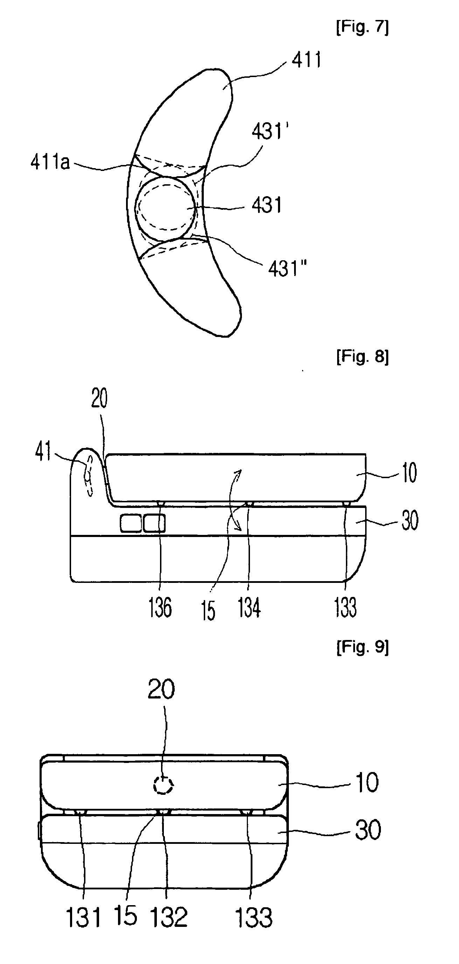

Fig. 7 is a schematic drawing illustrating the state in which the insertion parts 431 are inserted into the rotation grooves 411.

The rotation grooves 411 are grooves formed on the inner surface of each open/shut hinge arm 41, and the insertion parts 431 are inserted into the rotation grooves 411. The rotation grooves 411 have a diameter equal or similar to that of the insertion part 431. Also, an elastic member 411a is positioned on the insertion part 431 to limit the movement of the insertion part 431.

The elastic members 411a are positioned as a pair on a predetermined position and, as illustrated in Fig. 7, are flat springs that apply pressure on both ends of the insertion part 431. When the insertion part 431 is moved by the rotation of the folder 10 to the upper part 431' or lower part 431" of the rotation groove 411, the elastic member 411a elastically applies pressure on the insertion part 431. Thus, the insertion part 431 is returned to its original position 431 by the elastic force of the elastic member 411a.

Figs.8 and 9 are side elevation views as seen from directions B or C of Fig. 6.

As illustrated in Fig. 8, the control protrusion 15 formed on the outer surface of the folder 10 are in contact with the upper surface of the main body 30. Here, the control protrusion 15 may or may not be in contact with the keys 31. The folder 10 rotates clockwise or counter-clockwise about the control protrusion 15. In other words, when the right end of the folder 10 is pressed, the folder 10 rotates clockwise. When the left end of the folder 10 is pressed, the folder 10 rotates counter-clockwise. Here, the insertion part 431 is positioned on the lower part of the rotation groove 411 (431" of Fig. 7).

As illustrated in Fig. 9, the control protrusion 15 becomes the center of rotation of the folder 10 when the folder 10 rotates about the swivel hinge 20. In Fig. 9, when pressure is applied on the left side of the folder 10, the folder 10 rotates counter-clockwise and applies pressure on the push protrusion 131. Also, when pressure is applied on the right side of the folder 10, the folder 10 rotates clockwise and applies pressure on the push protrusion 133.

Therefore, since the folder 10 can rotate in the direction extended along the swivel hinge 20 or in a direction along a perpendicular axis it is fitted onto the main body 30 with the display part 11 exposed to the exterior, the folder 10 may be rendered a wider variety of key functions.

The keys on which pressure is applied by the push protrusions 13 may have various functions. Referring to Fig. 6, when the folder 10 is rotated 180° and fitted to the main body 30, applying pressure on the lower right end of the folder 10 makes the push protrusion 133 apply pressure on the key 31. Also, applying pressure on the lower left end of the folder 10 makes the push protrusion 131 apply pressure on the key, and applying pressure on the center of the lower end of the folder 10 makes the three push protrusions 131, 132, 133 apply pressure on the corresponding three keys 31.

In addition, applying pressure on the upper right end of the folder 10 makes the push protrusion 136 apply pressure on the key 31, applying pressure on the upper right end of the folder 10 makes the push protrusion 136 apply pressure on the key 31, and applying pressure on the center of the upper end makes the two push protrusions 136, 137 apply pressure on the two keys 31 simultaneously. Also, applying pressure on the middle left of the folder 10 makes the three push protrusions 131, 135, 137 apply pressure on the three keys 31, and applying pressure on the middle right of the folder 10 makes the three push protrusions 133, 134, 136 apply pressure on the three keys 31.

The keys on which pressure is applied by the push protrusions 131, 132, 133, 134, 135, 136, 137 each have separate functions different from the original functions due to the rotation of the folder 10, and they may have extra functions for the case wherein pressure is applied on two or more keys 31 simultaneously. Also, the keys 31 may have different functions according to the rotational direction of the folder 10 about the swivel hinge 20.

### Industrial Applicability

Through the foregoing composition, the invention may provide the following effect.

The invention provides a portable terminal having keys on the main body that may be used by pressing the folder when the folder is fitted to the main body with the interior display screen exposed to the exterior.

## Claims

1. A portable terminal comprising
a folder (10) having a display part (11) on the inner surface thereof and
a main body (30) having keys (31) and connected by a swivel hinge (20) to the folder **characterized in that** the keys (31) have extra functions when the folder is rotated, wherein the folder (10) has at least one push protrusions (131, 132, 133, 134, 135, 136, 137) that are formed to correspond to at least one of the keys (31) when the main body (30) and the folder (10) are superposed with the inner surface of the folder (10) exposed to the exterior.

2. The portable terminal according to claim 1, wherein the folder (10) has at least two or more push protrusions (131, 132, 133, 134, 135, 136, 137) on a surface thereof.

3. The portable terminal according to claim 2, wherein the functions of the keys (31) corresponding to the push protrusions (131, 132, 133, 134, 135, 136, 137) are different for the cases where each key is pressed individually and where at least two or more keys (31) are pressed simultaneously.

4. The portable terminal according to claim 1, wherein the folder (10) has a control protrusion (15) on the outer surface thereof, so that when the folder (10) is joined to the main body (30) with the display part (11) exposed to the exterior, it is joined to the main body to be rotatable about the control protrusion (15).

5. The portable terminal according to claim 4, wherein the control protrusion (15) is positioned on the rotational center axis of the folder (10).

6. The portable terminal according to claim 4, wherein the main body (30) and the folder (10) are joined by an open/shut hinge (40) ;
the open/shut hinge (40) comprises open/shut hinge arms (41) formed on the upper end of the main body (30) and an open/shut hinge axis (43) joined with the open/shut hinge arms (41) and having the swivel hinge (20) projecting on one side; and
the open/shut hinge arms (41) comprise rotation grooves (411), which guide the open/shut hinge axis (43) in order that the folder (10) may rotate about the control protrusion (15).

7. The portable terminal according to claim 6, wherein the rotation groove (411) comprises an elastic member (411a) which returns the open/shut hinge axis (43) to its original position.

## Patentansprüche

1. Tragbares Endgerät, umfassend:
eine Klappe (10) mit einem Anzeigenbereich (11) auf deren inneren Oberfläche und
einen Grundkörper (30) mit Tasten (31), welcher mittels eines Drehgelenks (20) mit der Klappe verbunden ist, **dadurch gekennzeichnet, dass** die Tasten (31) Extrafunktionen aufweisen, wenn die Klappe rotiert ist, wobei die Klappe (10) mindestens einen Drückvorsprung (131, 132, 133, 134, 135, 136, 137) aufweist, der/die korrespondierend zu mindestens einer der Tasten (31) ausgebildet ist/sind, wenn der Grundkörper (30) und die Klappe (10) derart übereinander liegen, dass die innere Oberfläche der Klappe (10) nach außen weist.

2. Tragbares Endgerät nach Anspruch 1, wobei die Klappe (10) mindestens zwei oder mehr Drückvorsprünge (131, 132, 133, 134, 135, 136, 137) auf einer ihrer Oberflächen aufweist.

3. Tragbares Endgerät nach Anspruch 2, wobei die Funktionen der Tasten (31), welche den Drückvorsprüngen (131, 132, 133, 134, 135, 136, 137) entsprechen, verschieden für die Fälle sind, bei denen jede Taste einzeln gedrückt ist, und bei denen mindestens zwei oder mehrere Tasten (31) gleichzeitig gedrückt sind.

4. Tragbares Endgerät nach Anspruch 1, wobei die Klappe (10) einen Steuerungsvorsprung (15) auf ihrer äußeren Oberfläche aufweist, so dass bei Verbindung der Klappe (10) mit dem Grundkörper (30) derart, dass der Anzeigenbereich (11) nach außen weist, diese um den Steuerungsvorsprung (15) rotierbar mit dem Grundkörper verbunden ist.

5. Tragbares Endgerät nach Anspruch 4, wobei der Steuerungsvorsprung (15) auf der Rotationsmittelachse der Klappe (10) befindlich ist.

6. Tragbares Endgerät nach Anspruch 4, wobei der Grundkörper (30) und die Klappe (10) mittels eines Auf/Zu-Gelenks (40) verbunden sind;
wobei das Auf/Zu-Gelenk (40) Auf/Zu-Gelenkarme (41) aufweist, die auf dem oberen Ende des Grundkörpers (30) ausgebildet sind, und eine Auf/Zu-Gelenkachse (43), die mit den Auf/Zu-Gelenkarmen (41) verbunden ist und wobei das Drehgelenk (20) auf einer Seite vorragt ist; und
die Auf/Zu-Gelenkarme (41) Rotationsnuten (411) aufweisen, welche die Auf/Zu-Gelenkachse (43) führen, damit die Klappe (10) um den Kontrollvorsprung (15) rotieren kann.

7. Tragbares Endgerät nach Anspruch 6, wobei die Rotationsnut (411) ein elastisches Element (411a) umfasst, welches die Auf/Zu-Gelenkachse (43) zu ihrer ursprünglichen Position zurückbringt.

## Revendications

1. Terminal portatif comprenant
un élément rabattable (10) comportant une partie d'affichage (11) sur la surface intérieure de celui-ci et
un corps principal (30) comportant des touches (31) et connecté par une articulation pivotante (20) à l'élément rabattable **caractérisé en ce que** les touches (31) ont des fonctions supplémentaires quand l'élément rabattable est tourné, dans lequel l'élément rabattable (10) a au moins une saillies de poussée (131, 132, 133, 134, 135, 136, 137) qui sont formées pour correspondre à au moins une des touches (31) quand le corps principal (30) et l'élément rabattable (10) sont superposés avec la surface intérieure de l'élément rabattable (10) exposée à l'extérieur.

2. Terminal portatif selon la revendication 1, dans lequel l'élément rabattable (10) a au moins deux ou plus saillies de poussée (131, 132, 133, 134, 135, 136, 137) sur une surface de celui-ci.

3. Terminal portatif selon la revendication 2, dans lequel les fonctions des touches (31) correspondant aux saillies de poussée (131, 132, 133, 134, 135, 136, 137) sont différentes dans les cas où chaque touche est pressée individuellement et où au moins deux ou plus touches (31) sont pressées simultanément.

4. Terminal portatif selon la revendication 1, dans lequel l'élément rabattable (10) a une saillie de commande (15) sur la surface extérieure de celui-ci, de telle manière que quand l'élément rabattable (10) est joint au corps principal (30) avec la partie d'affichage (11) exposée à l'extérieur, il est joint au corps principal pour pouvoir tourner autour de la saillie de commande (15).

5. Terminal portatif selon la revendication 4, dans lequel la saillie de commande (15) est positionnée sur l'axe de centre de rotation de l'élément rabattable (10).

6. Terminal portatif selon la revendication 4, dans lequel le corps principal (30) et l'élément rabattable (10) sont joints par une articulation d'ouverture/fermeture (40) ;
l'articulation d'ouverture/fermeture (40) comprend des bras d'articulation d'ouverture/fermeture (41) formés sur l'extrémité supérieure du corps principal (30) et un axe d'articulation d'ouverture/fermeture (43) joint avec les bras d'articulation d'ouverture/fermeture (41) et ayant une une articulation pivotante (20) faisant saillie sur un côté ; et les bras d'articulation d'ouverture/fermeture (41) comprennent des rainures de rotation (411), qui guident l'axe d'articulation d'ouverture/fermeture (43) afin que l'élément rabattable (10) puisse tourner autour de la saillie de commande (15).

7. Terminal portatif selon la revendication 6, dans lequel la rainure de rotation (411) comprend un élément élastique (411a) qui ramène l'axe d'articulation d'ouverture/fermeture (43) dans sa position originale.
